# EUROPÄISCHE PATENTSCHRIFT

(11) **EP 0 946 298 B1**
(45) Veröffentlichungstag und Bekanntmachung des Hinweises auf die Patenterteilung: **23.07.2003**
(21) Anmeldenummer: 97952835.3
(22) Anmeldetag: 01.12.1997
(51) Int. Cl.: B01J 31/40

(54) **VERFAHREN ZUR WIEDERGEWINNUNG VON BEI DER HERSTELLUNG VON N-ACYL-ALPHA-AMINOSÄUREDERIVATEN DURCH AMIDOCARBONYLIERUNG EINGESETZTEN COBALTCARBONYLKATALYSATOREN**
PROCESS FOR RECOVERING COBALT CARBONYL CATALYSTS USED TO PRODUCE N-ACYL-ALPHA-AMINOACID DERIVATIVES BY AMIDOCARBONYLATION
PROCEDE DE RECUPERATION DE CATALYSEURS DE COBALTCARBONYLE UTILISES DANS LA PREPARATION DE DERIVES DE N-ACYLE-ALPHA-AMINOACIDE PAR AMIDOCARBONYLATION

(30) Priorität: 05.12.1996 DE 19650501
(43) Veröffentlichungstag der Anmeldung: 06.10.1999
(73) Patentinhaber: Degussa AG, 40474 Düsseldorf (DE)
(72) Erfinder: GEISSLER, Holger, D-55116 Mainz (DE); GROSS, Peter, D-65451 Kelsterbach (DE); BOGDANOVIC, Sandra, D-60322 Frankfurt am Main (DE)
(86) Internationale Anmeldenummer: EP9706707
(87) Internationale Veröffentlichungsnummer: WO98024547

(56) Entgegenhaltungen:
- EP-A- 0 343 042
- EP-A- 0 779 102
- US-A- 4 497 964
- US-A- 4 699 999

## Beschreibung

Verfahren zur Wiedergewinnung von bei der Herstellung von N-Acyl-alpha-aminosäurederivaten durch Amidocarbonylierung eingesetzten Cobaltcarbonylkatalysatoren.

Unter Amidocarbonylierung versteht man die Carbonylierung von Carbonsäureamiden in Gegenwart von Aldehyden und Kohlenmonoxid bzw. Synthesegas zu N-Acyl-alpha-aminosäurederivaten. Diese Reaktion wird in Gegenwart von Cobaltcarbonylverbindungen als homogenen Katalysatoren durchgeführt. Durch den Einsatz von Fettsäureamiden als Amidkomponente und Formaldehyd als Aldehydkomponente kann mit diesem Verfahren die Substanzklasse der N-Acylsarkosine erschlossen werden, die als Tenside, Seifen und Emulgatoren technische Anwendung finden.

Ein wesentlicher Bestandteil eines derartigen Herstellverfahrens ist die Erarbeitung eines Katalysatorkreislaufes, d.h. eines Verfahrens zur Abtrennung des eingesetzten, im Reaktionsmedium gelösten Katalysators von dem hergestellten Produkt, dessen Wiederaufarbeitung und Rückführung in den Herstellungsprozeß.

Aus Kostengründen und zur Vermeidung von Umweltbelastungen durch Cobaltverbindungen ist ein möglichst vollständiges und dabei einfaches und kostengünstiges Wiedergewinnungsverfahren des eingesetzten Cobaltcarbonylkatalysators gefragt.

Verfahren zur Wiedergewinnung von Cobaltkatalysatoren sind bereits für verschiedene Umsetzungen beschrieben worden.

Die japanischen Offenlegungsschriften Nrn. 54-112816 und 58-198441 offenbaren Verfahren zur Herstellung von Dialkylmalonsäureestern durch Veresterung von Alkylmonohalogenessigsäure mit einen niederen aliphatischen Alkohol und Kohlenmonoxid in Gegenwart eines Cobaltcarbonylkatalysators und einer basischen Verbindung. Im Anschluß an diese Veresterung erfolgt die Zersetzung des Katalysators durch Zugabe einer wäßrigen Lösung einer anorganischen Säure, z.B. Schwefelsäure, bzw. durch Zugabe von Schwefelsäure und Sauerstoff in ein zweiwertiges wasserlösliches Cobaltsalz. In der so erhaltenen, von der organischen Phase abgetrennten wäßrigen Phase wird das wasserlösliche Cobaltsalz durch Zugabe von Alkalihydroxid, z.B. Natriumhydroxid, als wasserunlösliches Cobalthydroxid ausgefällt. Nach dem Waschen erfolgt abschließend die Überführung des Cobalthydroxids in die entsprechende Cobaltcarbonylverbindung durch Behandlung mit Kohlenmonoxid oder Kohlenmonoxid/Wasserstoff in Gegenwart eines organischen Lösungsmittels, z.B. eines aromatischen Kohlenwasserstoffs oder eines für die Veresterung geeigneten Alkohols. Der auf diese Weise gewonnene Cobaltcarbonylkatalysator wird wieder zur Veresterung eingesetzt.

In der japanischen Offenlegungsschrift Nr. 57-183749 wird ein Verfahren zur Herstellung von α-Amino-β-hydroxybutansäure beschrieben, bei dem in einem zunächst stattfindenden Carbonylierungsschritt die Umsetzung von Epichlorhydrin, Kohlenmonoxid, einer basischen Verbindung und eines Alkohols zur α-Amino-β-hydroxybutansäure erfolgt. In dem sich anschließenden Verfahrensschritt wird der Cobaltcarbonylkatalysator durch Zugabe von Mineralsäure, z.B. Schwefelsäure, und Sauerstoff zu der im vorangegangenen Verfahrensschritt erhaltenen Reaktionslösung unter Ausbildung eines zweiwertigen wasserlöslichen Cobaltsalzes zersetzt. Nachfolgend wird der in der Reaktionslösung vorhandene Alkohol entfernt und anschließend durch Zugabe von Wasser ein Zwei-Phasen-System hergestellt, das in eine wäßrige Phase, enthaltend das wasserlösliche Cobaltsalz, und eine organische Phase, enthaltend α-Amino-β-hydroxybutansäure, getrennt wird. Die Wiedergewinnung des Cobaltcarbonylkatalysators erfolgt durch Zugabe von Alkalimetallhydroxid zur wäßrigen Phase. Der gebildete Cobalthydroxidniederschlag wird abfiltriert, gewaschen und anschließend entwässert. Durch abschließende Umsetzung des Cobalthydroxids mit Kohlenmonoxid und Wasserstoff wird der Cobaltcarbonylkatalysator wiedergewonnen.

Gegenstand der EP-A-0 343 042 ist ein Verfahren zur Herstellung von Dialkylmalonsäureester durch Carbonylierung von Chloressigsäurealkylester in Gegenwart eines Cobaltcarbonylkatalysators. Die Rückgewinnung des eingesetzten Cobaltcarbonylkatalysators erfolgt in mehreren Verfahrensschritten, wobei zunächst durch Säurezugabe ein wasserlösliches Cobaltsalz hergestellt wird. Im nächsten Verfahrensschritt wird dieses Cobaltsalz in das Salz einer Fettsäure, z.B. Ölsäure, Palmitinsäure oder Stearinsäure, überführt. Aus diesem Fettsäuresalz wir durch Umsetzung mit Kohlenmonoxid und Wasserstoff der gewünschte Cobaltcarbonylkatalysator erhalten.

Ein Verfahren zur Wiedergewinnung von bei der Herstellung von N-Acyl-alpha-aminosäurederivaten durch Amidocarbonylierung eingesetzten Cobaltcarbonylkatalysatoren ist in der deutschen Patentanmeldung Nr. 195 45 641.9 beschrieben, die Stand der Technik nach §3 II PatG ist.
Dabei wird der in der Reaktionslösung vorhandene Katalysator durch Zusatz von H₂O₂ und gegebenenfalls einer Säure, z.B. Schwefelsäure, in ein wasserlösliches Cobalt(II)salz überführt. Nach der Phasentrennung und Zersetzung von überschüssigem H₂O₂ wird die wässerige, das Cobaltsalz enthaltende Phase mit einem Alkalimetallhydroxid auf pH 12 gebracht, um das Cobalt als Cobalthydroxidniederschlag auszufällen. Der so erhaltene Cobaltniederschlag muß sorgfältig gewaschen und getrocknet werden, um mitgerissene Salzreste zu entfernen. Anschließend wird das reine Cobalthydroxid mit N-Acyl-alpha-aminosäurederivat zu einer Schmelze verarbeitet, aus der der Cobaltcarbonylkatalysator durch Umsetzung mit Kohlenmonoxid und Wasserstoff bei erhöhter Temperatur und Druck erhalten wird.
Dieses Verfahren hat jedoch den Nachteil, daß bei hohen pH-Werten gearbeitet werden muß, wozu besonders geeignete Apperaturen verwendet werden müssen. Zudem wird eine beträchtliche Menge an Sulfatsalz (bis zu 10 Gew.-%) bei der Fällung des Cobalts als Hydroxid mitgerissen, das in aufwendigen Waschprozessen entfernt werden muß. Ein weiterer Nachteil ist, daß es bei der Umsetzung von Cobalthydroxid mit dem N-Acyl-alpha-aminosäurederivat zu einer Schmelze zur Bildung von Cobalthydroxidzusammenballungen kommen kann, die nur langsam weiterreagieren.

Es war Aufgabe der vorliegenden Erfindung ein Verfahren zur Wiedergewinnung von bei der Herstellung von N-Acyl-alpha-aminosäurederivaten, insbesondere N-Acylsarkosinen, durch Amidocarbonylierung eingesetzten Cobaltcarbonylkatalysatoren zur Verfügung zu stellen, mit dem die vorstehend genannten Nachteile überwunden werden können.

Prinzipiell sind bei einem derartigen Verfahren im Fall der N-Acyl-alpha-aminosäurederivate folgende technische Schwierigkeiten zu berücksichtigen.

Die Reaktionsprodukte der Amidocarbonylierung, insbesondere die bereits erwähnten N-Acylsarkosine, sind nicht flüchtig und können daher nicht destillativ aus der Reaktionslösung entfernt werden. Eine destillative Abtrennung der in reiner Form flüchtigen Cobaltcarbonylkatalysatoren ist ebenfalls nicht möglich, da diese beim Erhitzen der Reaktionslösung, d.h. in Gegenwart von N-Acyl-α-aminosäurederivaten, zerstört werden. Ebenso gilt es zu beachten, daß die zur Amidocarbonylierung eingesetzten Cobaltcarbonylkatalysatoren nach der Umsetzung nur noch zum Teil als aktive Cobaltcarbonylkatalysatoren vorliegen und damit das Verfahren zur Wiedergewinnung eine Anzahl verschiedener Cobaltcarbonylverbindungen zu berücksichtigen hat.

Andererseits wird die Abtrennung der Cobaltkatalysatoren aus der Reaktionslösung durch Phasentrennung in eine wäßrige, Cobalt enthaltende Phase und eine organische, Produkt enthaltende Phase durch die Ausbildung von Komplexen der Cobaltverbindungen und der erhaltenen N-Acyl-alpha-aminosäurederivate erschwert

Zudem lassen sich die Cobaltcarbonylkatalysatoren, im Unterschied zur Hydroformylierung, aufgrund der milden Reaktionsbedingungen während der Carbonylierungsstufe der Amidocarbonylierung nicht aus Co-(II)-salzen, z.B.

Cobaltacetat, Cobaltoxid und Cobalthydroxid, herstellen, sondern müssen in einem vorgeschalteten Verfahrensschritt hergestellt werden, um in der nachfolgenden Carbonylierungsstufe eingesetzt werden zu können.

Erfindungsgemäß wird die vorstehende Aufgabe durch ein Verfahren gelöst, das die folgenden Schritte umfaßt:
- Zugabe von wäßriger Wasserstoffperoxidlösung oder Zugabe von wäßriger Wasserstoffperoxidlösung und einer Mineralsäure zu der nach der Herstellung des N-Acyl-α-aminosäurederivats vorliegenden Reaktionslösung,
- danach Abtrennen der wäßrigen wasserlösliches Cobalt-(II)-salz enthaltenden Phase von der nicht-wäßrigen Produkt enthaltenden Phase,
- nachfolgend Zugabe von N-Acyl-alpha-aminosäurederivat-Alkalimetallsalz zu der wäßrigen Phase des vorangegangenen Verfahrensschrittes,
- danach Abtrennen des erhaltenen N-Acyl-alpha-aminosaurederivat-Cobaltsalz-Niederschlages, und
- abschließend Überführung des so erhaltenen N-Acyl-alpha-aminosäurederivat-Cobaltsalzes in Gegenwart eines Gemisches aus Kohlenmonoxid und Wasserstoff in den Cobaltcarbonylkatalysator.

Üblicherweise erfolgt die Überführung des N-Acyl-alpha-aminosäurederivat-Cobaltsalzes in den Cobaltcarbonylkatalysator bei einer Temperatur von 50 bis 250°C und einem Druck von 20 bis 250 bar.

Mit dem erfindungsgemäßen Verfahren können insbesondere die bei der Amidocarbonylierung eingesetzten Cobaltcarbonylkatalysatoren, insbesondere Co₂(CO)₈ und HCo(CO)₄, wiedergewonnen werden. Ausgangspunkt für dieses Verfahren ist die nach der Herstellung des N-Acyl-α-aminosäurederivates, insbesondere des N-Acylsarkosins, vorliegende Reaktionslösung. Besonders geeignet ist das erfindungsgemäße Verfahren für Reaktionslösungen, die entsprechend dem in der europäischen Patentanmeldung Nr. 95 106 329.6 (EP-A-0 680 948) beschriebenen Verfahren zur Herstellung von N-Acyl-α-aminosäurederivaten erhalten werden.

In dem ersten Verfahrensschritt erfolgt die Zugabe wäßriger Wasserstoffperoxidlösung zu dieser Reaktionslösung, wodurch zum einen die gebildeteten Cobaltcarbonyl-N-Acyl-alpha-aminosäurederivatkomplexe zerstört werden und zum anderen das in den Cobaltcarbonylverbindungen vorliegende Cobalt zu Cobalt(II) oxidiert wird, das wasserlösliche Salze bildet.

Es hat sich gezeigt, daß die Menge an zuzusetzender Wasserstoffperoxidlösung vorteilhafterweise 0,1 bis 5 Äquivalente, insbesondere 0,2 bis 4 Äquivalente und besonders bevorzugt 0,5 bis 2 Äquivalente betragen sollte (H₂O₂, bezogen auf in der Reaktionslösung vorhandenes Cobalt).

Ist die Amidocarbonylierung in mineralsaurer z.B. schwefelsaurer, Lösung erfolgt, so ist im allgemeinen der Zusatz weiterer Mineralsäure, bevorzugt verdünnter Schwefelsäure, zur Bildung wasserlöslicher Cobaltsalze nicht erforderlich.

Geeignete Mineralsäuren sind z.B. Schwefelsäure, Phosphorsäure, Salzsäure, phosphorige Säure und Perchlorsäure, wobei Schwefelsäure, insbesondere verdünnte Schwefelsäure, besonders bevorzugt ist.

Die in dem ersten Verfahrensschritt erhaltene wäßrige, wasserlösliches Co-(II)-salz, wie Cobalt(II)-sulfat, enthaltende Phase wird von der nicht-wäßrigen Phase, in der das Produkt vorliegt, abgetrennt.
Durch wiederholte Zugabe von Wasser oder wäßriger Säure zu der nicht-wäßrigen, das N-Acyl-α-aminosäurederivat enthaltenden Phase, gegebenenfalls in entsprechenden Extraktionsapparaten, z.B. Mixer-Settler, Zentrifugalextraktor und Gegenstromextraktionskolonne, kann, falls erforderlich, der Cobaltgehalt der nicht-wäßrigen Phase weiter verringert werden.

Es hat sich gezeigt, daß überschüssiges Wasserstoffperoxid, das nach der Phasentrennung in der wäßrigen Phase vorhanden ist, bei den erfindungsgemäß bevorzugten Fällungsbedingungen von ungefähr pH>7 zur Bildung von wasserhaltigem Cobalt-(III)-hydroxid führen kann, das in alkalischem Milieu stabil ist und als sehr feiner, schlecht filtrierbarer Niederschlag anfällt.
In einer bevorzugten Ausführungsform des erfindungsgemäßen Verfahrens wird daher das überschüssige Wasserstoffperoxid vor der Fällung des Cobalts als N-Acyl-alpha-aminosäurederivat-Cobaltsalz entfernt.
Üblicherweise erfolgt die Entfernung durch Erhitzen der wäßrigen Phase, bevorzugt bis zur Siedetemperatur.

Gegebenenfalls kann hierbei die wäßrige Phase vor dem Erhitzen mit Alkalimetallhydroxid, bevorzugt Natrium- und/oder Kaliumhydroxid, neutralisiert werden.

Technisch vorteilhaft ist das Erhitzen der wäßrigen Phase unter vermindertem Druck und gleichzeitigem Abdestillieren von gegebenenfalls noch in der wäßrigen Phase gelöstem Lösungsmittel.

Aus der wäßrigen Phase, aus der gegebenenfalls das überschüssige Wasserstoffperoxid entfernt worden ist, wird nunmehr erfindungsgemäß durch die Zugabe von N-Acyl-alpha-aminosäurederivat-Alkalimetallsalz, vorzugsweise von N-Acylsarkosinat-Alkalimetallsalz, wobei das N-Lauroylsarkosinat-Natrium- und/oder Kaliumsalz besonders bevorzugt sind, Cobalt als wasserunlöslicher Niederschlag des entsprechenden N-Acyl-alpha-aminosäurederivat-Cobaltsalzes erhalten.

Das N-Acyl-aminosäurederivat-Alkalisalz wird vorzugsweise in Form einer 30 gew.-%igen wäßrigen Lösung zugegeben. Nach Zugabe des N-Acyl-aminosäurederivat-Alkalimetallsalzes sollte der pH-Wert der wäßrigen Phase vorzugsweise ungefähr 7 betragen.

Um eine möglichst vollständige Fällung zu erzielen, ist es vorteilhaft, wenn die Konzentration des wasserlöslichen Cobaltsalzes in der wäßrigen Phase 2 Gew.-% nicht überschreitet.

Der erhaltene wasserunlösliche N-Acyl-alpha-aminosäurederivat-Cobaltsalzniederschlag wird mit üblichen Mitteln, wie Filtration, von der wäßrigen Phase abgetrennt.

Der nach dem erfindungsgemäßen Verfahren erhaltene Niederschlag enthält im allgemeinen weniger als 0,2 Gew.% an Salz der eingesetzten Säure, im Fall von Schwefelsäure Sulfatsalz. Falls erforderlich, können die gegebenenfalls noch vorhandenen Salzreste durch Waschen des Niederschlags mit Wasser entfernt werden, ohne daß hierbei ein signifikanter Austrag von Cobaltionen mit dem Waschwasser erfolgt. Es hat sich jedoch für das erfindungsgemäße Verfahren als vorteilhaft herausgestellt, wenn der N-Acyl-alpha-aminosäurederivat-Cobaltsalzniederschlag weitestgehend frei von anderen Salzen ist.

Vor der Weiterverarbeitung kann der Niederschlag getrocknet werden.
Im allgemeinen enthält der luftgetrocknete Niederschlag noch 3 mol Wasser pro mol Cobalt.

Der vorstehend beschriebene luftgetrocknete N-Acyl-alpha-aminosäurederivat-Cobaltsalzniederschlag kann gegebenenfalls bei 50 bis 100°C und 10 bis 100 Torr weiter getrocknet werden und so der Wassergehalt auf 1 mol Wasser pro mol Cobalt reduziert werden. Diese Trocknung ist für das erfindungsgemäße Verfahren in der Regel jedoch nicht notwendig.

Die Überführung des so erhaltenen N-Acyl-alpha-aminosäurederivat-Cobaltsalzes in den Cobaltcarbonylkatalysator wird bevorzugt in einem polar-aprotischen Lösungsmittel durchgeführt, das auch bei der nachfolgenden Amidocarbonylierung als Lösungsmittel verwendet werden kann, für die der mit dem erfindungsgemäßen Verfahren wiedergewonnene Cobaltcarbonylkatalysator eingesetzt wird. Als besonders geeignet haben sich Tetrahydrofuran, Glykoldimethylether, Tertiärbutylmethylether, Diglykoldimethylether, Dimethylformamid, Dimethylacetamid, Essigsäurebutylester, Acetonitril und N-Acylsarkosine erwiesen. Insbesondere werden Tetrahydrofuran, Tertiärbutylmethylether, N-Acylsarkosine und Glykoldimethylether eingesetzt.

Für die Überführung wird das N-Acyl-alpha-aminosäurederivat-Cobaltsalz mit Kohlenmonoxid oder einen Gemisch aus Kohlenmonoxid und Wasserstoff, sogenanntem Synthesegas, bei einer Temperatur von 50 bis 250°C und einem Druck von 40 bis 250 bar, bevorzugt 60 bis 200 bar, besonders bevorzugt 80 bis 180 bar, umgesetzt. Die Zusammensetzung des Kohlenmonoxid/Wasserstoff-Gemisches ist bevorzugt 4:1 bis 1:4. Der so erhaltene Cobaltcarbonylkatalysator ist für die Amidocarbonylierung uneingeschränkt einsetzbar.

Gemäß einer besonderen Ausführungsform kann das, gegebenenfalls getrocknete, N-Acyl-alpha-aminosäurederivat-Cobaltsalz vor der Überführung in den Cobaltkatalysator mit weiterem N-Acyl-alpha-aminosäurederivat vermischt und unter Erhitzen und Rühren zu einer Schmelze verarbeitet werden, wobei diese Schmelze anschließend als Ausgangsmaterial für die Umsetzung zu dem Cobaltkatalysator verwendet wird.
Hierbei beträgt das Molverhältnis N-Acyl-alpha-aminosäurederivat-Cobaltsalz zu N-Acyl-alpha-aminosäurederivat üblicherweise 1 : 2 - 5, bevorzugt 1 : 2,5 - 4.

Ein weiterer Vorteil des erfindungsgemäßen Verfahrens ist, daß gegebenenfalls noch in der wäßrigen Phase nach der Ausfällung verbleibende Cobaltreste wiedergewonnen und verarbeitet werden können, so daß eine vollständige Recyclisierung gewährleistet ist.

Üblicherweise enthält die verbleibende wäßrige Phase noch 10 bis 1000 ppm Cobalt. Diese Reste an Cobalt können beispielsweise durch Filtration über einen lonenaustauscher abgetrennt werden. Hierbei kann der lonenaustauscher bis zur Erschöpfung Verwendung finden. Der cobaltbeladene lonenaustauscher kann z.B. durch Waschen mit Natriumsulfatlösung regeneriert werden, so daß der lonenaustauscher wieder für weitere Cobaltabtrennungen bereitsteht.
Die durch das Waschen erhaltenen, Cobaltsulfat- und Natriumsulfat-enthaltende Abwasser können der für die erste Stufe des erfindungsgemäßen Verfahrens verwendeten Reaktionslösung zugesetzt werden ohne das erfindungsgemäße Verfahren zu beeinträchtigen.

Die folgenden Beispiele dienen der Veranschaulichung des erfindungsgemäßen Verfahrens.

### Herstellungsbeispiele

Die folgenden Beispiele betreffen die Wiedergewinnung von bei der Herstellung von Lauroylsarkosin durch Amidocarbonylierung eingesetztem Cobaltcarbonylkatalysator, wobei als Ausgangslösung folgende bei der Amidocarbonylierung erhaltene Reaktionslösung verwendet wurde.

110 I Reaktionslösung mit einer Dichte von 0,818 kg/l hatten die folgende Zusammensetzung: 60 % N-Lauroylsarkosin (Produkt), 39 % Lösemittel (tert-Butylmethylether), 0,44 % Schwefelsäure, 0,13 % Cobalt, 0,35 % Formaldehyd und ca. 0,04 % Methylamin. Es wurden 300 ml 32 %ige Wasserstoffperoxidlösung in Wasser zugesetzt und 30 Minuten bei 50°C gerührt. Nach Zusatz von 15 I Wasser wurden die Phasen getrennt und man erhielt 12 I Wasserphase und 113 I Produktphase. Die Wasserphase enthielt ca. 1 % tert-Butylmethylether, 0,98 % Cobalt, 2 % Formaldehyd, 1 % Methylammoniumsulfat, ca. 2,5 % Schwefelsäure und eine unbestimmte Menge an Wasserstoffperoxid.
Für die folgenden Beispiele wurden jeweils 1 I dieser Wasserlösung verwendet.

### Beispiel 1:

1000 ml der durch Abtrennung von der organischen Phase resultierenden schwefelsauren, noch Reste von Wasserstoffperoxid enthaltenden Cobaltsulfatlösung mit 0,98 Gew.-% Co werden durch Zugabe von ca. 130 g 18 gew.-%iger Natriumhydroxidlösung auf pH-Wert 6,5 eingestellt und anschließend durch Erhitzen auf Siedetemperatur von Wasserstoffperoxid befreit. Anschließend erfolgt die Zugabe von 333 ml wässriger 1 M N-Lauroylsarkosinat Natriumsalz-Lösung wobei N-Lauroylsarkosinat-Cobaltsalz in Form eines hellrosafarbenen Niederschlages anfällt.
Der Niederschlag wird abfiltriert und mit ca. 200 ml Wasser gewaschen, um gegebenenfalls noch vorhandene Sulfatreste zu entfernen.

Das erhaltene N-Lauroylsarkosinat-Cobaltsalz (260 g) wird in 260 g N-Lauroyisarkosin (ca. 3 Mol-Äquivalente) aufgeschlemmt und die zähflüssige Suspension unter Rühren auf 120°C erhitzt. Die cobalthaltige Schmelze wird unter vermindertem Druck von dem vorhandenen Wasser befreit (Druck: 50 mbar). Anschließend wird der Rückstand in 500 ml Methyl-t-butylether (MTBE) gelöst und im Stahlautoklaven bei 120 bar Druck mit Synthesegas (Verhältnis CO: H₂ = 2:1) carbonyliert. Die Reaktion erfolgt bei 70 bis 90°C.
Das gebildete Cobaltcarbonyl ist für die Amidocarbonylierung uneingeschränkt einsetzbar.

### Beispiel 2:

1000 ml einer durch Abtrennung von der organischen Phase resultierenden schwefelsauren, noch Reste von Wasserstoffperoxid enthaltenden Cobaltsulfatlösung mit 0,98 Gew.-% Co werden durch Zugabe von ca. 130 g 18 gew.-%iger Natriumhydroxidlösung auf pH-Wert 6,5 eingestellt und anschließend durch Erhitzen auf Siedetemperatur von Wasserstoffperoxid befreit.
Anschließend erfolgt die Zugabe von 333 ml wäßriger 1 M N-Lauroylsarkosinat Natriumsalz-Lösung, wobei N-Lauroylsarkosinat-Cobaltsalz in Form eines hellrosafarbenen Niederschlages anfällt.
Der Niederschlag wird filtriert und mit ca. 200 ml Wasser gewaschen, um gegebenenfalls noch vorhandene Sulfatreste zu entfernen.
Das N-Lauroylsarkosinat-Cobaltsalz (260 g) wird bei Raumtemperatur getrocknet (anschließend 220 g), in 500 ml MTBE (ca. 2 Mol-Äquivalente) aufgeschlemmt und die Suspension im Stahlautoklaven bei 120 bar Druck mit Synthesegas (Verhältnis CO: H₂ = 2:1) carbonyliert. Die Reaktion erfolgt bei 70 bis 90°C.
Das gebildete Cobaltcarbonyl ist für die Amidocarbonylierung uneingeschränkt einsetzbar.

### Beispiel 3:

1000 ml einer durch Abtrennung von der organischen Phase resultierenden schwefelsauren, noch Reste von Wasserstoffperoxid enthaltenden Cobaltsulfatlösung mit 0,98 Gew.-% Co werden durch Zugabe von ca. 130 g 18 gew.-%iger Natriumhydroxidlösung auf pH-Wert 6,5 eingestellt und anschließend durch Erhitzen auf Siedetemperatur von Wasserstoffperoxid befreit.
Anschließend erfolgt die Zugabe von 333 ml wässriger 1M N-Lauroylsarkosinat Natriumsalz-Lösung, wobei N-Lauroylsarkosinat-Cobaltsalz in Form eines hellrosafarbenen Niederschlages anfällt.
Der Niederschlag wird abfiltriert und mit ca. 200 ml Wasser gewaschen, um gegebenenfalls noch vorhandene Sulfatreste zu entfernen.
Das bei 75-80°C und 30 Torr bis zur Gewichtskonstanz getrocknete N-Lauroylsarkosinat-Cobaltsalz (205 g) wird in 500 ml MTBE gelöst und im Stahlautoklaven bei 120 bar Druck mit Synthesegas (Verhältnis CO: H₂ = 2:1) carbonyliert. Die Reaktion erfolgt bei 70 bis 90°C.
Das gebildete Cobaltcarbonyl ist für die Amidocarbonylierung uneingeschränkt einsetzbar.

### Beispiel 4:

Es wird wie in Beispiel 3 verfahren, jedoch mit dem Unterschied, daß das erhaltene, getrocknete N-Lauroylsarkosinat-Cobaltsalz (205 g) in einer Mischung aus 100 g N-Lauroylsarkosin und 700ml MTBE gelöst und im Stahlautoklaven bei 120 bar Druck mit Synthesegas (Verhältnis CO: H₂ = 2:1) carbonyliert wird. Die Reaktion erfolgt bei 70 bis 90°C.
Das gebildete Cobaltcarbonyl ist für die Amidocarbonylierung uneingeschränkt einsetzbar.

## Patentansprüche

1. Verfahren zur Wiedergewinnung von bei der Herstellung von N-Acyl-alpha-aminosäurederivaten durch Amidocarbonylierung eingesetzten Cobaltcarbonylkatalysatoren umfassend die Verfahrensschritte:
- Zugabe von wäßriger Wasserstoffperoxidlösung zu der nach der Herstellung des N-Acyl-α-aminosäurederivats vorliegenden Reaktionslösung,
- danach Abtrennen der wäßrigen wasserlösliches Cobalt-(II)-salz enthaltenden Phase von der nicht-wäßrigen Produkt enthaltenden Phase,
- nachfolgend Zugabe von N-Acyl-alpha-aminosäurederivat-Alkalimetallsalz zu der wäßrigen Phase des vorangegangenen Verfahrensschrittes,
- danach Abtrennen des erhaltenen N-Acyl-alpha-aminosäurederivat-Cobaltsalz-Niederschlages, und
- abschließend Überführung des so erhaltenen N-Acyl-alpha-aminosäurederivat-Cobaltsalzes in Gegenwart eines Gemisches aus Kohlenmonoxid und Wasserstoff in den Cobaltcarbonylkatalysator.

2. Verfahren nach Anspruch 1, wobei der Reaktionslösung zusätzlich zu dem Wasserstoffperoxid eine Mineralsäure zugesetzt wird.

3. Verfahren nach Anspruch 2, wobei die Mineralsäure ausgewählt ist unter Halogenwasserstoffsäure, Schwefelsäure und Phosphorsäure.

4. Verfahren nach Anspruch 1 oder 2, wobei nach dem Abtrennen der wäßrigen das wasserlösliche Cobalt-(II)-salz enthaltenden Phase das in dieser Phase vorhandene Wasserstoffperoxid entfernt wird.

5. Verfahren nach Anspruch 4, wobei die Entfernung des Wasserstoffperoxids durch Erhitzen der wäßrigen Phase erfolgt.

6. Verfahren nach Anspruch 4 oder 5, wobei vor dem Entfernen des Wasserstoffperoxids die wäßrige Phase mit Alkalimetallhydroxid neutralisiert wird.

7. Verfahren nach einem der vorhergehenden Ansprüche, wobei das N-Acyl-alpha-aminosäurederivat-Alkalimetallsalz ausgewählt wird unter dem entsprechenden Natrium- und Kaliumsalz.

8. Verfahren nach einem der vorhergehenden Ansprüche, wobei als N-Acyl-alpha-aminosäurederivat-Alkalimetallsalz das entsprechende N-Acylsarkosinat-Alkalimetallsalz verwendet wird.

9. Verfahren nach einem der vorhergehenden Ansprüche, wobei der erhaltene N-Acyl-alpha-aminosäurederivat-Cobaltsalzniederschlag nach der Fällung gewaschen und getrocknet wird.

10. Verfahren nach einem der vorhergehenden Ansprüche, wobei das N-Acyl-alpha-aminosäure-Cobaltsalz in Form einer Schmelze mit dem N-Acyl-alpha-aminosäurederivat, zu dessen Herstellung der Cobaltcarbonylkatalysator vorgesehen ist, zu dem Cobaltcarbonylkatalysator umgesetzt wird.

11. Verfahren nach einem der vorhergehenden Ansprüche, wobei Wasserstoffperoxid in einer Menge von 0,1 bis 5 Äquivalenten, bezogen auf in der Reaktionslösung vorhandenem Cobalt, verwendet wird.

12. Verfahren nach einem der vorhergehenden Ansprüche, wobei die Umsetzung mit Kohlenmonoxid und Wasserstoff bei einer Temperatur von 50 bis 250°C erfolgt.

13. Verfahren nach einem der vorhergehenden Ansprüche, wobei die Umsetzung mit Kohlenmonoxid und Wasserstoff bei einem Druck von 20 bis 250 bar erfolgt.

14. Verfahren nach einem der vorhergehenden Ansprüche, wobei die Konzentration an wasserlöslichem Cobaltsalz, das in der wäßrigen Phase vorhanden ist, 2 Gew.-% nicht überschreitet.

15. Verfahren nach einem der vorhergehenden Ansprüche, wobei die Überführung des N-Acyl-alpha-aminosäurederivat-Cobaltsalzniederschlags der cobalthaltigen Schmelze in den Cobaltcarbonylkatalysator in einem polar-aprotischen Lösungsmittel durchgeführt wird.

## Claims

1. A process for recovering cobalt carbonyl catalysts used in the preparation of N-acyl-alpha-amino acid derivatives by amidocarbonylation comprising the process steps:
- adding aqueous hydrogen peroxide solution to the reaction solution present after the preparation of the N-acyl-α-amino acid derivative,
- then separating the aqueous phase containing water-soluble cobalt(II) salt from the nonaqueous product-containing phase,
- subsequently adding an alkali metal salt of the N-acyl-alpha-amino acid derivative to the aqueous phase from the previous process step,
- then separating off the precipitated cobalt salt of the N-acyl-alpha-amino acid derivative, and
- finally converting the resulting cobalt salt of the N-acyl-alpha-amino acid derivative into the cobalt carbonyl catalyst in the presence of a mixture of carbon monoxide and hydrogen.

2. A process according to claim 1, wherein a mineral acid is, in addition to the hydrogen peroxide, added to the reaction solution.

3. A process according to claim 2, wherein the mineral acid is selected from the group consisting of hydrohalic acids, sulphuric acid and phosphoric acid.

4. A process according to claim 1 or 2, wherein, after the aqueous phase containing the water-soluble cobalt(II) salt is separated off, the hydrogen peroxide present in this phase is removed.

5. A process according to claim 4, wherein the removal of the hydrogen peroxide is carried out by heating the aqueous phase.

6. A process according to claim 4 or 5, wherein the aqueous phase is neutralized with alkali metal hydroxide before removal of the hydrogen peroxide.

7. A process according to any one of the preceding claims, wherein the alkali metal salt of the N-acyl-alpha-amino acid derivative is selected from the group consisting of the corresponding sodium and potassium salts.

8. A process according to any one of the preceding claims, wherein the alkali metal salt of the N-acyl-alpha-amino acid derivative is the corresponding alkali metal N-acylsarcosinate.

9. A process according to any one of the preceding claims, wherein the precipitate of the cobalt salt of the N-acyl-alpha-amino acid derivative is washed and dried after the precipitation.

10. A process according to any one of the preceding claims, wherein the cobalt salt of the N-acyl-alpha-amino acid is reacted in the form of a melt with the N-acyl-alpha-amino acid derivative for whose preparation the cobalt carbonyl catalyst is intended to form the cobalt carbonyl catalyst.

11. A process according to any one of the preceding claims, wherein hydrogen peroxide is used in an amount of from 0.1 to 5 equivalents, based on the cobalt present in the reaction solution.

12. A process according to any one of the preceding claims, wherein the reaction with carbon monoxide and hydrogen is carried out at a temperature of from 50 to 250°C.

13. A process according to any one of the preceding claims, wherein the reaction with carbon monoxide and hydrogen is carried out at a pressure of from 20 to 250 bar.

14. A process according to any one of the preceding claims, wherein the concentration of water-soluble cobalt salt present in the aqueous phase does not exceed 2% by weight.

15. A process according to any one of the preceding claims, wherein the conversion of the precipitate of the cobalt salt of the N-acyl-alpha-amino acid derivative in the cobalt-containing melt into the cobalt carbonyl catalyst is carried out in a polar, aprotic solvent.

## Revendications

1. Procédé de récupération de catalyseur au cobalt-carbonyle mis en oeuvre dans la production de dérivés d'alpha-aminoacides N-acylés par amidocarbonylation, qui comprend les étapes de procédé :
- addition d'une solution aqueuse de péroxy de l'hydrogène à la solution réactionnelle qui se présente après la production du dérivé α-amino acide N-acylé,
- ensuite, séparation de la phase aqueuse contenant un sel de cobalt (II) soluble dans l'eau, de la phase contenant le produit non-aqueux,
- dans ce qui suit, addition de sel de métal alcalin de dérivé d'alpha amino acide N-acylé à la phase aqueuse de l'étape de procédé précédente,
- ensuite, séparation du précipité de sel de cobalt de dérivés d'alpha amino-acide N-acylé et pour finir transfert de sel d cobalt du dérivé d'alpha amino acide N-acylé en présence d'un mélange à base de monoxyde de carbone et d'hydrogène, dans le catalyseur au cobalt-carbonyle.

2. Procédé selon la revendication 1,
dans lequel
on ajoute en supplément au péroxyde d'hydrogène, à la solution réactionnelle, un acide minéral.

3. Procédé selon la revendication 2,
dans lequel
l'acide minéral est choisi parmi les acides halohydriques, l'acide sulfurique et l'acide phosphorique.

4. Procédé selon la revendication 1 ou la revendication 2,
dans lequel
après séparation de la phase aqueuse contenant le sel de cobalt (II) soluble dans l'eau, on élimine le péroxyde d'hydrogène présent dans cette phase.

5. Procédé selon la revendication 4,
dans lequel
l'élimination du péroxyde d'hydrogène s'effectue par chauffage de la phase aqueuse.

6. Procédé selon la revendication 4 ou 5,
dans lequel
avant élimination du peroxyde d'hydrogène, on neutralise la phase aqueuse avec un hydroxyde de métal alcalin.

7. Procédé selon l'une quelconque des revendications précédentes,
dans lequel
le sel de métal alcalin de dérivé d'alpha-amino acide N-acylé est choisi parmi les sels de sodium et de potassium correspondants.

8. Procédé selon l'une quelconque des revendications précédentes,
dans lequel
on utilise comme sel de métal alcali de dérivé d'alpha-amino acide N-acylé, le sel de métal alcali de N-acylsarcosinate.

9. Procédé selon l'une quelconque des revendications précédentes,
dans lequel
le précipité de sel de cobalt de dérivé d'alpha-amino acide N-acylé obtenu est lavé et séché après la précipitation.

10. Procédé selon l'une des revendications précédentes,
dans lequel
on convertit en catalyseur au cobalt carbonyle le sel de cobalt d'alfa-amino-acide N-acylé sous la forme d'un produit de fusion avec le dérivé d'alpha-amino-acide N-acylé, pour la production duquel le catalyseur au cobalt carbonyle est prévu.

11. Procédé selon l'une des revendications précédentes,
dans lequel
on utilise le péroxyde d'hydrogène en une quantité de 0,1 à 5 équivalents-rapporté au cobalt présent dans la solution réactionnelle.

12. Procédé selon l'une des revendications précédentes,
dans lequel
la réaction avec le monoxyde de carbone et l'hydrogène, s'effectue à une température de 50 à 250°C.

13. Procédé selon l'une des revendications précédentes,
dans lequel
la réaction avec le monoxyde de carbone et l'hydrogène s'effectue à une pression de 20 à 250 bars.

14. Procédé selon l'une des revendications précédentes,
dans lequel
la concentration en sel de cobalt soluble dans l'eau qui est présent dans la phase aqueuse ne dépasse pas 2 % en poids.

15. Procédé selon l'une des revendications précédentes,
dans lequel
le transfert du précipité de sel de cobalt du dérivé d'alpha-amino acide N-acylé du produit de fusion contenant du cobalt dans le catalyseur au cobalt-carbonyle, est exécuté dans un solvant polaire aprotique.
